# EUROPEAN PATENT APPLICATION

(11) **EP 4 549 110 A1**
(43) Date of publication of application: **07.05.2025**
(21) Application number: 23831493.4
(22) Date of filing: 28.06.2023
(51) Int. Cl.: B25J 15/12

(54) **ROBOT HAND AND METHOD FOR MANUFACTURING ROBOT HAND**

(30) Priority: 29.06.2022 JP 2022104716
(71) Applicant: Mitsui Chemicals, Inc., Tokyo 104-0028 (JP)
(72) Inventor: KINBARA, Yuho, Sodegaura-shi, Chiba 299-0265 (JP)
(74) Representative: Hoffmann Eitle
(86) International application number: PCT/JP2023/023928
(87) International publication number: WO 2024/005053

(57) **Abstract**

This robot hand comprises at least one finger. The finger comprises: a sheath that includes multiple chambers, passages that each connect adjacent ones of the chambers, and recesses each arranged between adjacent ones of the chambers; and a plurality of blocks that are disposed within the chambers.

## Description

### Technical Field

The present disclosure relates to a robot hand and a method for manufacturing the robot hand.

### Background Art

In the related art, robot hands including a finger whose shape changes in accordance with the fluid pressure have been proposed. PTL 1 and PTL 2 disclose examples of such robot hands, for example.

### Citation List

### Patent Literature

PTL 1
   Japanese Unexamined Patent Application Publication (Translation of PCT Application) No. 2018-512304
PTL 2
   Japanese Unexamined Patent Application Publication (Translation of PCT Application) No. 2020-518478

### Summary of Invention

### Technical Problem

Robot hands including a finger whose shape changes in accordance with the fluid pressure are required to be set to a desired shape to reliably grab objects.

For example, leakage of fluid from a finger results in a higher possibility that the finger is not set to the desired shape. As such, it is necessary to prevent the leakage of fluid from the finger.

In addition, if the finger has an unplanned deformation due to the external force before grabbing an object, the finger may possibly be changed to an unexpected shape even when the fluid pressure is changed. In this case, the finger is not set to the desired shape, and consequently the robot hand may not possibly grab the object. As such, it is necessary that the finger is not deformed even when an external force is applied, i.e., that the shape of the finger is not changed by any force other than the change of the fluid pressure.

**In** addition, if the desired shape cannot be maintained when an object is grabbed, the grabbing force on the object cannot be maintained, and consequently the object may not possibly be grabbed any further. As such, when grabbing an object, it is necessary for the finger to maintain the shape that can maintain the grabbing force on the object.

An object of the present disclosure is to provide a robot hand including a finger that can be set to a desired shape.

### Solution to Problem

A robot hand according to an aspect of the present disclosure includes at least one finger, in which the finger includes: a sheath including a plurality of chambers, a passage configured to communicate between chambers adjacent to each other among the plurality of chambers, and a recess disposed between the chambers adjacent to each other among the plurality of chamber; and a plurality of blocks disposed in the plurality of chambers.

In addition, a method for manufacturing a robot hand of the present disclosure includes: preparing a plurality of blocks through which a rod extends and a mold including a plurality of protrusions on an inner surface; disposing the plurality of blocks in the mold in a state where the plurality of blocks and the plurality of protrusions are aligned in an alternate manner; injecting liquid resin into the mold to surround the plurality of blocks with the resin; curing the resin; and pulling out the rod from the plurality of blocks with the plurality of blocks left in the resin cured.

### Advantageous Effects of Invention

According to the present disclosure, it is possible to provide a robot hand including a finger that can be set to a desired shape.

### Brief Description of Drawings

FIG. 1 is a schematic view of a robot hand;
FIG. 2 is a schematic view of a robot hand grabbing an object;
FIG. 3 is a front view of a sheath;
FIG. 4 is a side view of the sheath;
FIG. 5 is a cross-sectional view taken along line V-V in FIG. 3;
FIG. 6 is a cross-sectional view taken along line VI-VI in FIG. 4;
FIG. 7 is a cross-sectional view taken along line VII-VII in FIG. 4;
FIG. 8 is a front view of a block;
FIG. 9 is a side view of the block;
FIG. 10 is a sectional view of a finger;
FIG. 11 is a sectional view of a bent finger;
FIG. 12 is a diagram illustrating a manufacturing process of the robot hand;
FIG. 13 is a diagram illustrating a manufacturing process of the robot hand;
FIG. 14 is a diagram illustrating a manufacturing process of the robot hand; and
FIG. 15 is a diagram illustrating a manufacturing process of the robot hand.

### Description of Embodiments

A robot hand and a method for manufacturing the same according to an embodiment of the present disclosure are described below with reference to the drawings. The embodiment described below is merely an example. This disclosure does not exclude the application of various variations and techniques not explicitly mentioned in the following embodiments.

In all figures used to describe the embodiments, the same elements are, in principle, marked with the same symbols, and their description may be omitted. In addition, the scale is not necessarily the same among the drawings.

### General Configuration of Robot Hand

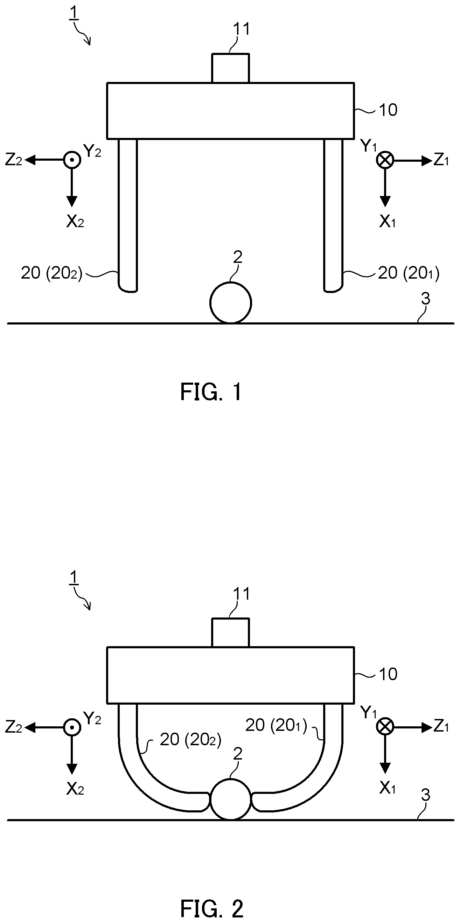

An entirety of robot hand 1 according to an embodiment of the present disclosure is described below with reference to FIGS. 1 and 2. FIG. 1 is a schematic view of robot hand 1 according to the embodiment of the present disclosure. FIG. 1 illustrates a state where object 2, which is an object to be grabbed by robot hand 1, is placed on placing surface 3. FIG. 2 is a schematic view of robot hand 1 grabbing object 2.

Robot hand 1 includes base part 10 and at least one finger 20. Robot hand 1 illustrated in FIGS. 1 and 2 includes two fingers 20 disposed opposite to each other. In the following description, two fingers 20 may be referred to as first finger 20₁ and second finger 20₂ as necessary for the purpose of distinction. Note that the number of fingers 20 in robot hand 1 may be one, or three or more.

Base part 10 includes port 11. Port 11 is connected to a tube channel composed of a pipe, a tube and the like. The tube channel is connected with a fluid pressure application apparatus such as a pump.

Finger 20 is attached to base part 10. Finger 20 is an elongated member. The base end of finger 20 is attached to base part 10. The tip end of finger 20 is disposed near object 2, and can make contact with object 2.

A space communicated with port 11 and finger 20 is formed inside base part 10. In addition, a space communicated with the internal space of base part 10 is formed inside finger 20. The inside of the tube channel, the inside of base part 10 and the inside of finger 20 are filled with fluid, and when the fluid pressure application apparatus applies a pressure to the fluid in the tube channel, this pressure is transmitted to the fluid in base part 10 and the fluid in finger 20. That is, the fluid pressure application apparatus can apply a pressure to the fluid in finger 20.

Note that the fluid provided in the tube channel, base part 10 and inside finger 20 is air, water, or oil, for example.

In addition, base part 10 is formed of a material (e.g., metal or resin) having a rigidity with which the shape does not change even when the fluid pressure in base part 10 changes.

Finger 20 is configured such that finger 20 has an elongated shape extending along one straight line as illustrated in FIG. 1 when the fluid pressure in finger 20 is equal to the pressure (e.g., atmosphere pressures) outside the finger 20. In addition, finger 20 is configured to be bent as illustrated in FIG. 2 when the fluid pressure inside finger 20 becomes high, and to be reset to the original shape when the fluid pressure becomes low. In the following description, the state where finger 20 has an elongated shape along one straight line is referred to as initial state, and the state where finger 20 has a bent shape is referred to as operation state.

In addition, in the state where finger 20 is in the initial state, the straight line extending along finger 20 is the X axis, and the direction from the base end of finger 20 toward the tip end of finger 20 is the X-axis direction. In addition, the two axes orthogonal to the X axis are the Y axis and the Z axis, and the directions parallel to the Y axis and the Z axis are the Y-axis direction and the Z-axis direction. The X axis, the Y axis and the Z axis form an orthogonal coordinate system. Finger 20 deforms along the XZ plane. In addition, a part (referred to as first surface or second surface) of finger 20 that can make contact with object 2 is the belly (belly surface) of finger 20, and a part (referred to as first surface or second surface) of finger 20 that is located on the back side of the belly is the back (back surface) of finger 20. The Z-axis direction is the direction from the belly toward back of finger 20. The back (back surface) of finger 20 is the surface that does not make contact with object 2.

Note that the belly (belly surface) and the back (back surface) of finger 20 may be composed of a pair of surfaces (e.g., a pair of flat surfaces parallel to each other of a finger 20 with a cuboid shape) that can be clearly distinguished from each other. In addition, the belly (belly surface) and the back (back surface) of finger 20 may be composed of one part and another part of one surface (e.g., a cylindrical surface of a finger 20 with a columnar shape) that cannot be clearly distinguished from each other.

The extending directions of first finger 20₁ and second finger 20₂ in the initial state are equal to each other. The bending directions of first finger 20₁ and second finger 20₂ are different from each other. Thus, the X₁Y₁Z₁ coordinate system, which is the orthogonal coordinate system related to first finger 20₁, and the X₂Y₂Z₂ coordinate system, which is the orthogonal coordinate system related to second finger 20₂ have the following relationships. Specifically, the X₁ axis and the X₂ axis are parallel to each other, and the X₁ axis direction and the X₂ axis direction are the same direction. In addition, the Y₁ axis and the Y₂ axis are parallel to each other, and the Y₁ axis direction and the Y₂ axis direction are opposite directions. In addition, the Z₁ axis and the Z₂ axis are parallel to each other, and the Z₁ axis direction and the Z₂ axis direction are opposite directions.

Note that in the present embodiment, the extending directions of first finger 20₁ and second finger 20₂ in the initial state are equal to each other as illustrated in FIG. 1, but the extending directions of first finger 20₁ and second finger 20₂ in the initial state may be different from each other. For example, first finger 20₁ and second finger 20₂ may extend in opposite directions (in the case of three or more fingers 20, radial directions). In this case, the X₁Y₁Z₁ coordinate system, which is the orthogonal coordinate system related to first finger 20₁, and the X₂Y₂Z₂ coordinate system, which is the orthogonal coordinate system related to second finger 20₂ have the following relationships. Specifically, the X₁ axis and the X₂ axis are parallel to each other, and the X₁ axis direction and the X₂ axis direction are opposite directions. In addition, the Y_{1 axis} and the Y₂ axis are parallel to each other, and the Y₁ axis direction and the Y₂ axis direction are opposite directions. In addition, the Z₁ axis and the Z₂ axis are parallel to each other, and the Z₁ axis direction and the Z₂ axis direction are the same direction.

Finger 20 is bent when the fluid pressure inside finger 20 becomes high, and is reset to the original shape when the fluid pressure becomes low. Finger 20 is configured such that the bend of finger 20 changes in accordance with the fluid pressure inside finger 20. Thus, when the fluid pressure application apparatus applies a pressure to the fluid in the tube channel, this pressure is transmitted to the fluid inside finger 20 through base part 10, and finger 20 is bent as illustrated in FIG. 2, for example. In this manner, robot hand 1 can grab object 2.

Robot hand 1 may be attached to the robot arm. By moving robot hand 1 by operating the robot arm after robot hand 1 grabs object 2, robot hand 1 can lift up object 2 and move object 2 to a desired place.

### Structure of Finger

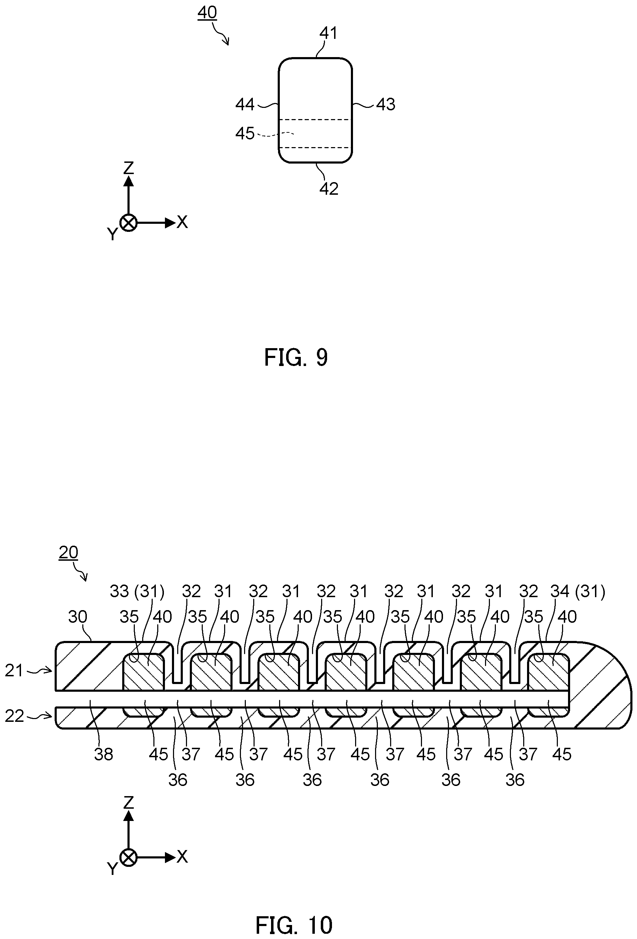

Next, finger 20 is elaborated. Finger 20 is composed of sheath 30 and a plurality of blocks 40 (see FIG. 10). The exterior surface of finger 20 is composed of sheath 30. As such, sheath 30 will be described first.

### Sheath

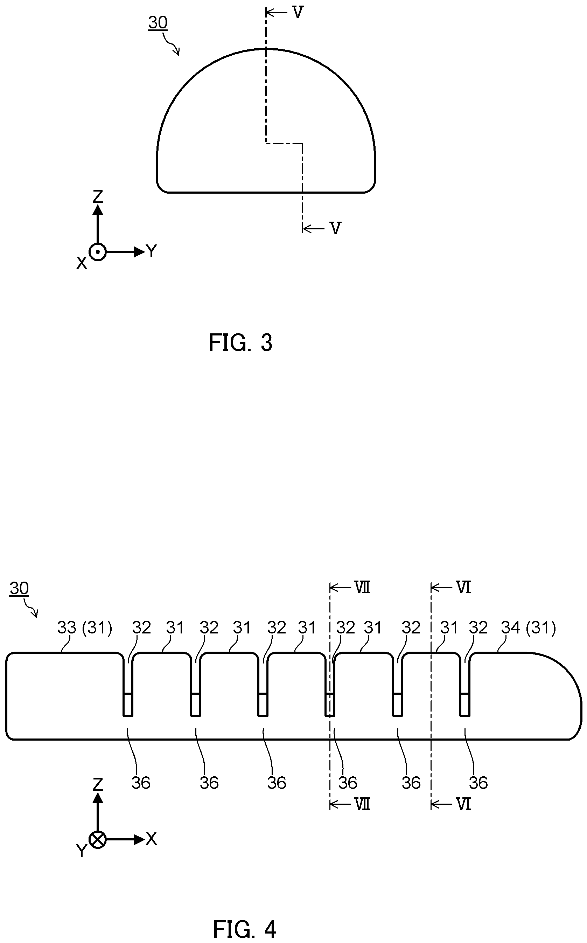

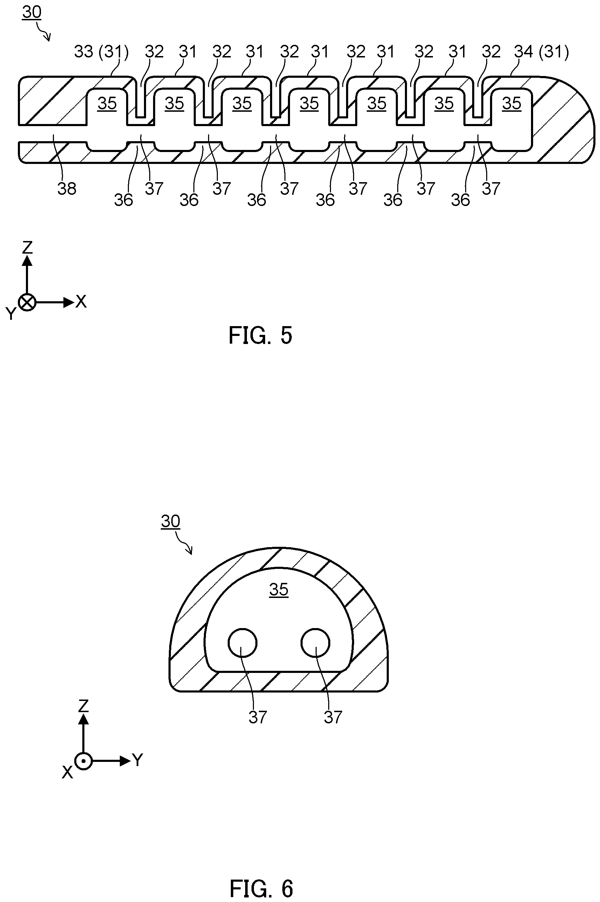

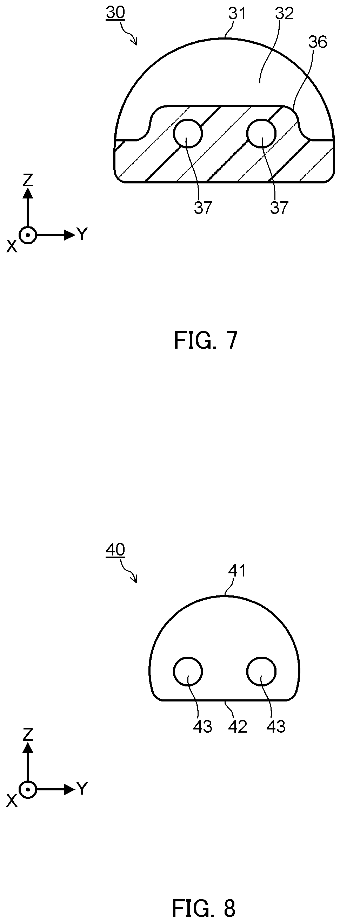

FIG. 3 is a front view of sheath 30, and FIG. 4 is a side view of sheath 30. FIG. 5 is a cross-sectional view taken along line V-V in FIG. 3, FIG. 6 is a cross-sectional view taken along line VI-VI in FIG. 4, and FIG. 7 is a cross-sectional view taken along line VII-VII in FIG. 4.

Sheath 30 is formed of flexible and stretchable resin. Sheath 30 may be formed of a material with a Shore A hardness of 10 to 90. The material of sheath 30 may be urethane rubber, silicone rubber, and olefinic thermoplastic elastomers, for example.

As described above, sheath 30 makes up the exterior surface of finger 20. Thus, a part of sheath 30 makes up the belly of finger 20, and the other part of sheath 30 makes up the back of finger 20. In other words, the belly of sheath 30 makes up the belly of finger 20, and the back of sheath 30 makes up the back of finger 20. Specifically, the belly of sheath 30 is the belly of finger 20, and the back of sheath 30 is the back of finger 20. In addition, the base end of sheath 30 is the base end of finger 20, and the tip end of sheath 30 is the tip end of finger 20.

As illustrated in FIG. 3, sheath 30 has a shape (D-shape) with an arc extending along the back and a straight line extending along the belly in front view (in the view facing the YZ plane). Note that in front view, sheath 30 may have a shape of polygons such as quadrangles and triangles, or a circle.

In addition, sheath 30 includes a plurality of protrusions 31 and a plurality of recesses 32 as is clearly shown in side view (in the view facing the XZ plane), i.e., as illustrated in FIG. 4. The plurality of protrusions 31 and the plurality of recesses 32 are disposed in an alternate manner in the extending direction (i.e., the X-axis direction) of sheath 30, i.e., finger 20. Protrusion 31 making up the base end of sheath 30 (the portion connected to base part 10) makes up base end part 33. In addition, protrusion 31 making up the tip end of sheath 30 (the portion farthest from base part 10) makes up distal end part 34.

Protrusion 31 has a shape protruding in the direction toward the back from the belly of sheath 30 (i.e., the Z-axis direction). Recess 32 has a shape recessed in the direction toward the belly from the back of sheath 30.

As illustrated in FIG. 5, chamber 35 is formed as a space inside protrusion 31 including base end part 33 and distal end part 34. That is, sheath 30 includes a plurality of chambers 35. Chambers 35 have the same shape. In the present embodiment, as illustrated in FIG. 6, chamber 35 has a shape (D-shape) with a combination of an arc on the back side and a straight line on the belly side in front view. In addition, as illustrated in FIG. 5, chamber 35 has a rectangular shape with round corners in side view.

In addition, sheath 30 includes connecting part 36 that is located next to recess 32 in the Z-axis direction to connect protrusions 31 adjacent to each other at a position closer to the belly of sheath 30 than recess 32. Passage 37 extending in the X-axis direction is formed in connecting part 36. Passage 37 connects chamber 35 and another chamber 35. That is, chambers 35 adjacent to each other among the plurality of chambers 35 are communicated with each other through passage 37. In the present embodiment, as illustrated in FIGS. 6 and 7, chambers 35 adjacent to each other are communicated with each other through a pair of passages 37 arranged in the Y-axis direction. Note that chambers 35 adjacent to each other may be communicated with each other through one passage 37 or through three or more passages 37 instead of the pair of passages 37.

Chamber 35 formed at base end part 33 is communicated with the outside of sheath 30 through base end passage 38. Base end passage 38 is a port of the internal space of sheath 30 composed of the plurality of chambers 35 and passage 37 communicating them. Each passage 37 and base end passage 38 are arranged on one or a plurality of (in the present embodiment, two) lines (in the present embodiment, straight lines).

Each recess 32 is sandwiched between chambers 35 adjacent to each other among the plurality of chambers 35, and is depressed deep such that the bottom of recess 32 is close to passage 37. The back of sheath 30 has a cross section extending in a zigzag manner when taken along a plane parallel to the XZ plane. On the other hand, the belly of sheath 30 has a cross section extending linearly when taken along a plane parallel to the XZ plane. That is, sheath 30 has an accordion shape on the back side and a plate shape on the belly side. In other words, the route along the back of sheath 30 from the base end to the tip end of sheath 30 is longer than the route along the belly of sheath 30. In other words, in the outer surface of sheath 30, sheath 30 includes recess 32 in the first surface (i.e., back surface), which is a surface that does not make contact with the object grabbed by robot hand 1. In addition, in the outer surface of sheath 30, sheath 30 has a flat surface in a second surface (i.e., belly surface), which is a surface that is opposite to the first surface (i.e., back surface) and can make contact with the object grabbed by the robot hand.

### Block

Next, block 40 disposed in sheath 30 is described. FIG. 8 is a front view of block 40, and FIG. 9 is a side view of block 40.

Block 40 is a member disposed in chamber 35 of sheath 30. Block 40 is formed of a material with a rigidity that is not deformed even when the fluid pressure in sheath 30 is changed, and is not deformed even when an external force is applied to finger 20 and/or a grabbing force of finger 20 is applied to object 2. Block 40 is formed of a material that is not bonded to sheath 30 such as a silicone resin, for example.

Block 40 has peripheral surface 41, which is a cylindrical surface, bottom surface 42, which is a flat surface, distal surface 43, which is a flat surface, and a proximal surface 44, which is a flat surface. Distal surface 43 and proximal surface 44 are parallel to each other. In addition, peripheral surface 41 and bottom surface 42 are orthogonal to distal surface 43 and proximal surface 44.

Block 40 has the same shape as chamber 35 of the state where finger 20 is in the initial state. Specifically, in the present embodiment, block 40 has a shape of a combination of an arc on the back side and a straight line on the belly side in front view, and has a rectangular shape with round corners in side view. Block 40 may have a shape obtained by cutting a part of a column from the column in a plane parallel to the central axis of the column.

Block 40 includes through hole 45. Through hole 45 is open at distal surface 43 and proximal surface 44.

In the present embodiment, block 40 includes a pair of through holes 45. The number of through holes 45 provided in block 40 is equal to the number of passages 37 that connect chambers 35 adjacent to each other. Thus, in the case where chambers 35 adjacent to each other are communicated with each other through one through passage 37, block 40 includes one through hole 45. In addition, in the case where chambers 35 adjacent to each other are communicated with each other through three or more passages 37, block 40 includes three or more through holes 45.

Through hole 45 is disposed at a position where it overlaps passage 37 in front view when block 40 is disposed in chamber 35 of sheath 30. In addition, the shape of through hole 45 in front view is the same as the shape of passage 37 in front view.

### Finger

Next, finger 20 composed of sheath 30 and block 40 is described. FIG. 10 is a cross-sectional view taken along line V-V of a case where sheath 30 illustrated in FIG. 3 is finger 20 (i.e., block 40 is disposed in sheath 30). The portion represented by the reference numeral 21 in FIG. 10 is a back part of finger 20, and the portion represented by the reference numeral 22 is the belly part of finger 20.

Block 40 is disposed in each of the plurality of chambers 35 of sheath 30. Through hole 45 of block 40 is disposed to be connected with passage 37. In the initial state, base end passage 38, a plurality of passages 37 and a plurality of through holes 45 form a linearly extending long hole with one end closed.

The inner surface of chamber 35 is easily separated from the outer surface of block 40 (more specifically, peripheral surface 41, bottom surface 42, distal surface 43 and proximal surface 44). A thin gap may be present between the inner surface of chamber 35 and at least a part of the outer surface of block 40 (e.g., peripheral surface 41, distal surface 43 and proximal surface 44).

When the pressure application apparatus applies a pressure to the fluid in finger 20 having the above-mentioned configuration through base part 10, the fluid pressure in finger 20 increases. More specifically, the fluid pressure in passage 37 and chamber 35 increases.

Then sheath 30 expands. At this time, each part of sheath 30 extends. In the case where the thickness of each part making up sheath 30 is the same, the amount of extension of each part per unit length is equal to each other. In addition, in the range from the base end to the tip end of sheath 30, the route along the back (back part 21) of sheath 30 is longer than the route along the belly (belly part 22) of sheath 30. Thus, the sum of the amount of extension of back part 21 is greater than the sum of the amount of extension of belly part 22.

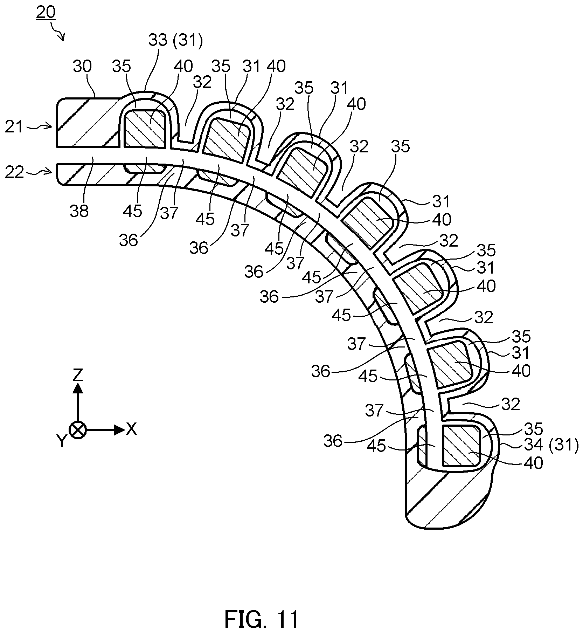

As a result, as illustrated in FIG. 11, finger 20 is curved and deformed along the XZ plane with back part 21 located at the outer periphery and belly part 22 located at the inner periphery. At this time, finger 20 is set to the operation state. When the fluid pressure in finger 20 is reset, i.e., reduced, to the original state, finger 20 is reset to the state illustrated in FIG. 10, i.e., the initial state. By adjusting the fluid pressure in finger 20, the difference between the amount of extension of back part 21 and the amount of extension of belly part 22 can be adjusted, and in turn, the bend of finger 20 can be adjusted. Specifically, finger 20 can be set to the desired shape.

Note that in the case where the thickness of each part making up sheath 30 varies portion to portion, the amount of extension of each part per unit length varies portion to portion. More specifically, the amount of extension of a thick portion is smaller than that of a thin portion. As such, the bend of finger 20 may be adjusted by changing the thickness of each part making up sheath 30 portion to portion such that belly part 22 is thicker than back part 21, for example.

In addition, when sheath 30 expands, protrusions 31 adjacent to each other may make contact with each other. By causing protrusions 31 to make contact with each other and push each other, the bend of finger 20 can be increased, the grabbing force of robot hand 1 can be increased, and shape retention can be improved.

### Effects

Robot hand 1 having the above-mentioned configurations includes at least one finger 20. Finger 20 includes sheath 30 including the plurality of chambers 35, passage 37 that communicates between chambers 35 adjacent to each other among the plurality of chambers 35, and recess 32 disposed between chambers 35 adjacent to each other among the plurality of chambers 35. In addition, finger 20 includes the plurality of blocks 40 disposed in the plurality of chambers 35.

Thus, finger 20 provided in robot hand 1 can be set to a desired shape. In turn, robot hand 1 can reliably grab object 2.

In addition, if block 40 is not disposed in chamber 35, chamber 35 can possibly be deformed in a crushed manner when an external force of compressing finger 20 in the direction parallel to the X-axis is applied to the tip end of finger 20. If each chamber 35 is crushed, the deformation amount (constriction amount) of finger 20 increases. If the fluid pressure in finger 20 increases in this state, finger 20 can possibly be deformed in an unexpected manner. That is, the possibility that object 2 cannot be grabbed increases. Note that, for example, such a circumstance can occur in a case where finger 20 is inserted into the container to grab one object 2 from among a plurality of pairs of objects 2 in the container but finger 20 makes contact with other object 2 than the object to be grabbed.

In contrast, block 40 is disposed in chamber 35. Thus, even when an external force is applied to finger 20, chamber 35 is not deformed, and the shape of finger 20 before the application of the external force can be maintained. Thus, it is possible to maintain the shape of finger 20 in its entirety before the application of the external force to finger 20. In this manner, before or while robot hand 1 grabs object 2, unplanned deformation of finger 20 due to external forces can be prevented. In turn, object 2 can be reliably grabbed with finger 20 set in the desired shape.

In the present embodiment, each of the plurality of blocks 40 has substantially the same outer surface shape as the inner surface shape of one of the plurality of chambers 35 where they are housed. That is, in the initial state, there is no gap between the inner surface of chamber 35 and the outer surface of block 40, or there is only a small gap between the inner surface of chamber 35 and the outer surface of block 40. Thus, finger 20 is not deformed due to a change in the size of the gap between chamber 35 and block 40 due to the external force. Thus, before robot hand 1 grabs object 2, unplanned deformation of finger 20 due to external forces can be reliably prevented.

Note that all of the plurality of blocks 40 may not have the same shape (i.e., the similar shape with the same size). For example, the sizes of blocks 40 may decrease from the base end toward the tip end of finger 20. In this case, the sizes of chambers 35 may also decrease from the base end toward the tip end of finger 20.

In addition, in the present embodiment, each of the plurality of blocks 40 includes a pair of flat surfaces (i.e., distal surface 43 and proximal surface 44) orthogonal to the extending direction of passage 37. In other words, block 40 is disposed in chamber 35 such that the extending direction of passage 37 and distal surface 43 and proximal surface 44 are orthogonal to each other. In such an arrangement, distal surface 43 of one block 40 is opposite to and in parallel to proximal surface 44 of another block 40 through recess 32 and connecting part 36. Thus, even if an external force of compressing finger 20 in the direction parallel to the X-axis is applied to the tip end of finger 20, finger 20 is only minimally deformed. More specifically, after slightly curved with back part 21 on the inner periphery side and belly part 22 on the outer circumference side, finger 20 is not deformed any further. That is, when finger 20 is slightly deformed such that one block 40 and another block 40 push each other through recess 32, finger 20 is not deformed any further. Thus, even when an external force is applied, object 2 can be reliably grabbed with finger 20 set in the desired shape.

In addition, in the present embodiment, as with block 40, protrusion 31 also includes a pair of wall surfaces orthogonal to the extending direction of passage 37. Thus, the wall surfaces of protrusions 31 disposed next to each other can be easily brought into contact with each other by expanding sheath 30 by increasing the fluid pressure in sheath 30. That is, the state where protrusions 31 push each other can be easily set. Thus, the bend of finger 20 can be increased, the grabbing force of robot hand 1 can be increased, and shape retention can be improved.

In addition, in the present embodiment, block 40 is disposed in chamber 35, but is not inserted in passage 37. Further, blocks 40 are disposed in sheath 30 so as not to make direct contact with each other. In other words, protrusion 31 where chamber 35 for block 40 is formed is connected to the adjacent protrusion 31 through connecting part 36 where passage 37 is formed. Thus, when finger 20 is deformed, hinderance of deformation of finger 20 due to blocks 40 making contact with each other can be prevented. In this manner, object 2 can be reliably grabbed with finger 20 set in the desired shape. In addition, noise due to blocks 40 making contact with each other can be prevented.

In addition, in the present embodiment, each of the plurality of blocks 40 includes through hole 45 that leads to passage 37. Thus, the pressure applied by the pressure application apparatus is smoothly transmitted inside finger 20. That is, the pressure in each chamber 35 can be quickly set to the same pressure. Thus, object 2 can be reliably grabbed with finger 20 set in the desired shape.

Note that block 40 may not include through hole 45. In this case, through passage 37 and the gap between the inner surface of chamber 35 and the outer surface of block 40, the pressure applied by the pressure application apparatus can be transmitted inside finger 20. In turn, finger 20 can be bent.

In addition, in the present embodiment, block 40 includes bottom surface 42, which is a flat surface, and a part of the inner surface of chamber 35 is composed of a flat surface facing bottom surface 42. Thus, block 40 does not rotate around the axis (e.g., the central axis of finger 20) that is parallel to the X axis inside chamber 35. That is, each of the plurality of blocks 40 is disposed inside each of the plurality of chambers 35 in a non-rotatable manner. Thus, even when the gap between the inner surface of chamber 35 and the outer surface of block 40 increases such as when the pressure inside chamber 35 increases, through hole 45 can be reliably maintained in a state where it is disposed on one line together with passage 37 and base end passage 38. In turn, the pressure in each chamber 35 can be quickly set to the same pressure regardless of the fluid pressure in finger 20 and the bend of finger 20.

Note that naturally, the way of setting block 40 in a non-rotatable manner in the plurality of chambers 35 is not limited to the configuration in which block 40 includes bottom surface 42, which is a flat surface, and a part of the inner surface of chamber 35 is composed of a flat surface facing bottom surface 42. For example, block 40 may include a key, and chamber 35 may include a key groove in which the key fits.

In addition, in the present embodiment, the plurality of blocks 40 may include an outer surface with grain. More specifically, the grain may be formed on at least one of peripheral surface 41, bottom surface 42, distal surface 43 and proximal surface 44. The grain may be formed on all of peripheral surface 41, bottom surface 42, distal surface 43 and proximal surface 44. With the grain formed on the outer surface of block 40, when the fluid pressure in sheath 30 increases to expand sheath 30, the outer surface of block 40 can be immediately separated from the inner surface of chamber 35. In turn, finger 20 can be smoothly deformed. Thus, object 2 can be reliably grabbed with finger 20 set in the desired shape.

In addition, in the present embodiment, sheath 30 may be formed of a material with a Shore A hardness of 10 to 90. In this case, sheath 30 has flexibility and stretchability. In this manner, in accordance with the variation in the fluid pressure in sheath 30, sheath 30, i.e., finger 20 can be smoothly deformed. In turn, object 2 can be reliably grabbed with finger 20 set in the desired shape.

Note that sheath 30 may be formed of a material with a Shore A hardness of 30 to 70. In this case, sheath 30 can more reliably have the flexibility and stretchability required for deformation and grabbing object 2.

In addition, passage 37 may be formed at a position closer to the belly of sheath 30 than the center of chamber 35 along the direction toward the back from the belly of sheath 30 (i.e., the Z-axis direction). With passage 37 formed at such a position, the depth of recess 32 can be ensured. In turn, in the range from the base end to the tip end of sheath 30, the route along the back of sheath 30 can be more reliably made longer than the route along the belly of sheath 30. In this manner, finger 20 can be reliably deformed along the XZ plane with back part 21 located at the outer periphery and belly part 22 located at the inner periphery.

### Manufacturing Method

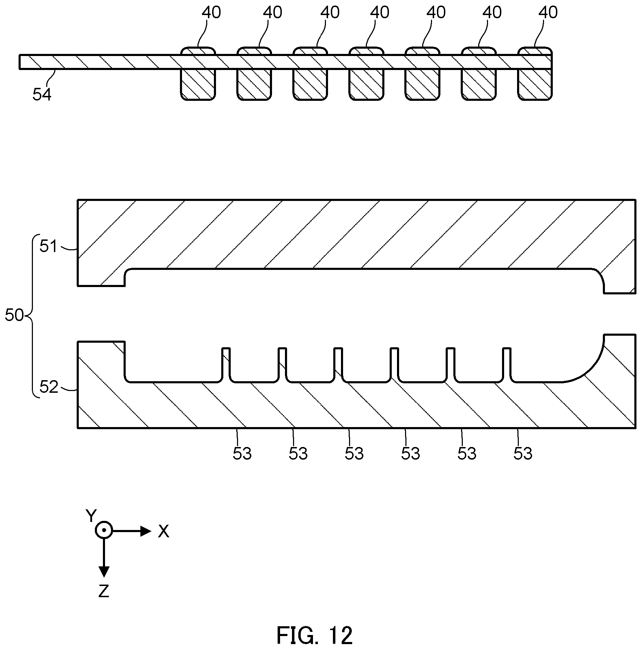

Next, a method for manufacturing robot hand 1 is described. First, a method for manufacturing finger 20 is described with reference to FIG. 12 to FIG. 15. The XYZ coordinate system illustrated in FIG. 12 to FIG. 15 is an XYZ coordinate system of a finger that is being manufactured.

FIG. 12 is a sectional view illustrating materials prepared for manufacture of finger 20. The reference numeral 50 in FIG. 12 represents a mold. Mold 50 is a metal mold, for example. Mold 50 includes upper mold 51 and lower mold 52. Lower mold 52 includes a plurality of protrusions 53. The member indicated by the reference numeral 54 in FIG. 12 is a rod. Rod 54 extends through the plurality of blocks 40. Specifically, rod 54 is inserted to through hole 45 of block 40. Note that while FIG. 12 illustrates only one rod 54, a pair of rods 54 is disposed in an overlapping manner in the Y-axis direction, thus extending through the plurality of blocks 40. Rod 54 is a linearly extending round rod.

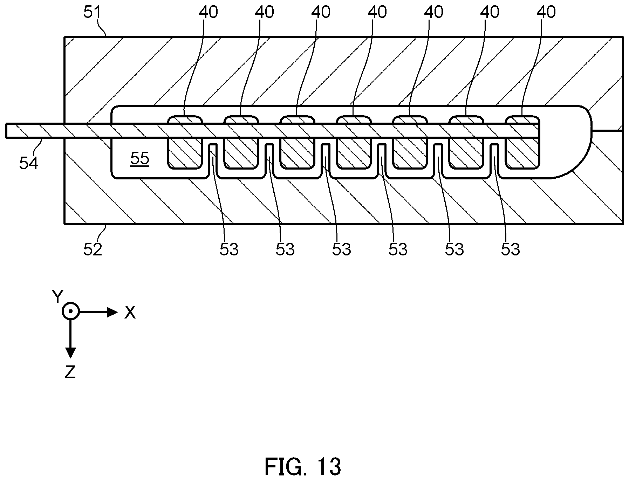

Subsequently, as illustrated in FIG. 13, the plurality of blocks 40 through which rod 54 extends is disposed between upper mold 51 and lower mold 52 to alternate with the plurality of protrusions 53, and upper mold 51 is matched with lower mold 52. In other words, the plurality of blocks 40 is disposed in mold 50 with the plurality of blocks 40 and the plurality of protrusions 53 disposed in an alternate manner. At this time, cavity 55 is formed between upper mold 51 and lower mold 52. A part of rod 54 and the plurality of blocks 40 are located inside cavity 55.

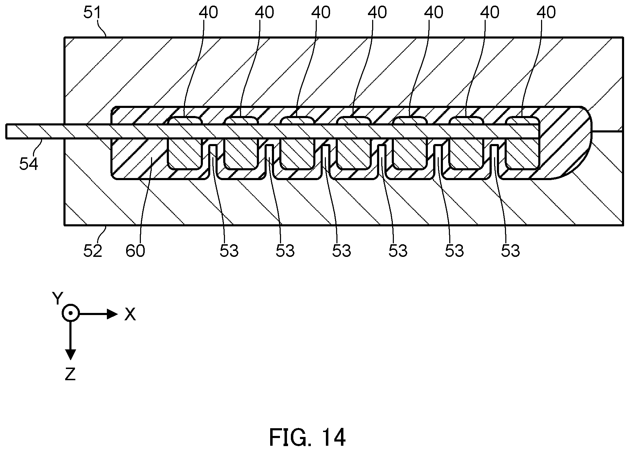

Subsequently, as illustrated in FIG. 14, liquid resin 60 is injected into mold 50, i.e., cavity 55 so as to surround the plurality of blocks 40 with resin 60. In the case where resin 60 is a thermosetting resin, resin 60 is heated. In the case where resin 60 is a thermoplastic resin, resin 60 is cooled. In any case, resin 60 is cured inside mold 50, and becomes flexible and stretchable sheath 30. Note that although not shown in the sectional view of FIG. 14, a supply port for injecting liquid resin 60 and an air ejection port are formed in at least one of upper mold 51 and lower mold 52.

Block 40 functions as a mold for forming chamber 35, and rod 54 functions as a mold for forming passage 37 and base end passage 38.

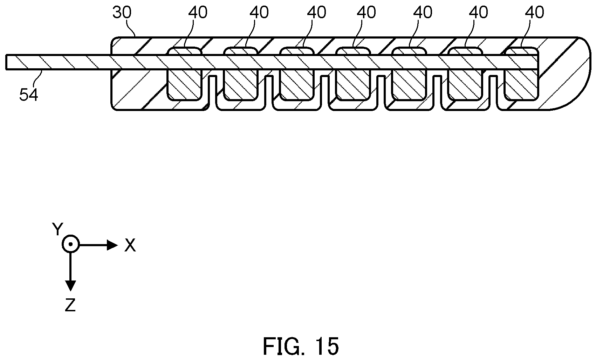

Subsequently, together with rod 54, sheath 30 and the plurality of blocks 40 are removed from mold 50. FIG. 15 illustrates rod 54, sheath 30 and the plurality of blocks 40 removed from mold 50. Thereafter, rod 54 is pulled out from the plurality of blocks 40 with the plurality of blocks 40 left in cured resin 60 (i.e., sheath 30). That is, only rod 54 is pulled out from sheath 30. In the above-described manner, finger 20 illustrated in FIG. 10 is completed. Note that rod 54 may be pulled out from sheath 30 with sheath 30 and the plurality of blocks 40 located inside mold 50.

After the completion of finger 20, robot hand 1 is completed by attaching finger 20 to base part 10.

### Effects

In the above-mentioned manufacturing method, sheath 30 is formed by curing liquid resin 60 inside mold 50. Thus, sheath 30 is formed completely integrally. That is, sheath 30 has no gap for fluid to leak, and has no bonding portion that can becomes a gap. In this manner, even when the fluid pressure in sheath 30 is increased after completion of robot hand 1, leakage of fluid from sheath 30 can be prevented. In turn, finger 20 can be set to the desired shape.

Note that sheath 30 may be formed by surrounding with a resin layer the plurality of blocks 40 with rod 54 inserted inside by using a three-dimensional printer of a fused deposition modeling. Note that in the case where sheath 30 is formed using a three-dimensional printer of a fused deposition modeling, leakage of fluid from a gap between stacked layers can possibly occur. However, by forming sheath 30 by curing liquid resin 60 inside mold 50 as described above, sheath 30 can be completely integrally formed, and leakage of fluid from the gap and the like can be reliably prevented.

In addition, according to the above-mentioned manufacturing method, block 40 that functions as a mold for forming sheath 30, especially chamber 35, can be left in sheath 30 after completion of sheath 30. That is, it is not necessary to pull out, from sheath 30, block 40 that forms the inner surface of sheath 30.

Thus, sheath 30 can be prevented from being damaged when the mold is pulled out from sheath 30, the yield of the manufacturing of robot hand 1 can be improved.

In addition, since it is not necessary to pull out block 40, the cross-sectional area (the cross-sectional area taken along the plane parallel to the YZ plane) of chamber 35 can be sufficiently larger than the cross-sectional area (the cross-sectional area taken along the plane parallel to the YZ plane) of passage 37. As a result, the depth of recess 32 ensured. In turn, in the range from the base end to the tip end of sheath 30, the route along the back of sheath 30 can be more reliably made longer than the route along the belly of sheath 30. In this manner, finger 20 can be reliably deformed along the XZ plane with back part 21 located at the outer periphery and belly part 22 located at the inner periphery.

In the above-mentioned manufacturing method, mold 50 is disposed in a posture in which protrusion 53 formed in lower mold 52 protrudes from the bottom toward the top. Thus, when liquid resin 60 is injected into cavity 55, retention of unremoved air between protrusions 53 can be prevented. In turn, the thickness of each part of sheath 30 can be set as designed. As a result, finger 20 can be reliably set to the desired shape by adjusting the fluid pressure in sheath 30.

Note that the inside of cavity 55 may be vacuumized in advance. In addition, an air ejection port may be formed in each region between protrusions 53. In such cases, mold 50 may not be disposed in a posture in which protrusion 53 formed in lower mold 52 protrudes from the bottom toward the top. For example, mold 50 may be disposed in a posture with protrusion 53 protruding from the bottom toward the top. That is, upper mold 51 and lower mold 52 may be disposed such that lower mold 52 is located on the upper side of upper mold 51. In addition, mold 50 may be disposed in a posture with protrusion 53 protruding in the horizontal direction. That is, upper mold 51 and lower mold 52 may be disposed at the same height.

In the above-mentioned manufacturing method, rod 54 is sandwiched between upper mold 51 and lower mold 52. In addition, rod 54 has a cantilever beam shape in cavity 55. Thus, the space in sheath 30 and the outside of sheath 30 can be communicated through only base end passage 38 for which rod 54 is the mold.

Note that in the case where openings other than base end passage 38 are formed in sheath 30, it is necessary to perform a step of closing these openings. In addition, even after the openings are closed, the possibility of leakage of fluid from the closed openings is relatively higher than a case where such openings are not formed. In the first place, sheath 30 manufactured by the above-mentioned manufacturing method includes no opening other than base end passage 38. Thus, it is not necessary to perform a step of closing the opening, and leakage of fluid from sheath 30 can be prevented in advance.

In the above-mentioned manufacturing method, the plurality of blocks 40 is not in contact with the inner surface of mold 50. In other words, a gap with a predetermined thickness is formed between the outer surface of block 40 and the inner surface of mold 50. The thickness of the gap corresponds to the thickness of sheath 30. That is, with the plurality of blocks 40 not in contact with the inner surface of mold 50, formation of the portion where sheath 30 has no thickness, i.e., formation of a hole in sheath 30, can be prevented.

In the above-mentioned manufacturing method, the pair of rods 54 extends through the plurality of blocks 40 and the pair of rods 54 is sandwiched between upper mold 51 and lower mold 52. As a result, each rod 54 is not allowed to rotate relative to neither mold 50 nor the plurality of blocks 40. That is, the plurality of blocks 40 cannot rotate relative to mold 50. Thus, by setting a state where block 40 and mold 50 do not make contact with each other when block 40 through which rod 54 extends is disposed in mold 50, block 40 and mold 50 do not make contact with each other afterward due to rotation of block 40 in cavity 55. For example, even when molten resin 60 is injected into cavity 55 and pushed by resin 60, block 40 and mold 50 do not make contact with each other. Specifically, with rod 54 disposed in mold 50 in a non-rotatable state with respect to mold 50 and the plurality of blocks 40, formation of sheath 30 with a hole due to block 40 making contact with mold 50 can be reliably prevented.

In addition, in the above-mentioned manufacturing method, after resin 60 is cured, the cured resin 60 may be expanded by supplying fluid into cured resin 60 (i.e., sheath 30), and block 40 may be peeled from the inner surface of cured resin 60. Through such a step, when robot hand 1 is actually used by applying a pressure to the fluid in sheath 30 with a pressure application apparatus, the outer surface of block 40 can be reliably separated from the inner surface of chamber 35. In turn, finger 20 can be reliably deformed. Thus, object 2 can be reliably grabbed with finger 20 set in the desired shape.

### Modifications

The robot hand and the method for manufacturing the robot hand according to the present disclosure are not limited to the specific forms described so far, but also include those with various modifications to the extent that the intent is not departed from.

For example, robot hand 1 may not include base part 10. That is, robot hand 1 may be composed only of one or a plurality of fingers 20. For example, robot hand 1 may be composed of only one finger 20. In this case, robot hand 1 can grab a soft and long object by bending finger 20 and catching the object on finger 20.

When the fluid pressure in finger 20 is substantially equal to the fluid pressure outside finger 20 (e.g., atmosphere pressures), finger 20 may have shapes other than linear shapes such as a shape extending along an arc. In this case, each passage 37 and base end passage 38 are disposed side by side on an arc-like curve. In this case, the belly of finger 20 may be located on the inner periphery side or the outer circumference side of the arc. In the case where the belly is located on the inner periphery side of the arc and the back is located on the outer periphery side of the arc, robot hand 1 can be controlled to grab an object by deforming finger 20 by increasing the fluid pressure to increase the bend. In addition, in the case where the belly is located on the outer periphery side of the arc and the back is located on the inner periphery side of the arc, robot hand 1 can be controlled to grab an object by deforming the finger (e.g., into a linear shape), or by bending it to the opposite side, by increasing the fluid pressure to reduce the bend. For manufacture of finger 20 with a shape extending along an arc, a round rod extending along an arc may be used as rod 54.

This application is entitled to and claims the benefit of Japanese Patent Application No. 2022-104716 filed on June 29, 2022, the disclosure each of which including the specification, drawings and abstract is incorporated herein by reference in its entirety.

### Industrial Applicability

The present disclosure is applicable to a robot hand for grabbing various objects and a method for manufacturing the same.

### Reference Signs List

1 Robot hand
2 Object
3 Placing surface
10 Base part
11 Port
20 Finger
20₁ First finger
20₂ Second finger
21 Back part
22 Belly part
30 Sheath
31 Protrusion
32 Recess
33 Base end part
34 Distal end part
35 Chamber
36 Connecting part
37 Passage
38 Base end passage
40 Block
41 Peripheral surface
42 Bottom surface
43 Distal surface
44 Proximal surface
45 Through hole
50 Mold
51 Upper mold
52 Lower mold
53 Protrusion
54 Rod
55 Cavity
60 Resin

## Claims

1. A robot hand comprising at least one finger, wherein the finger includes:
a sheath including a plurality of chambers, a passage configured to communicate between chambers adjacent to each other among the plurality of chambers, and a recess disposed between the chambers adjacent to each other among the plurality of chamber; and
a plurality of blocks disposed in the plurality of chambers.

2. The robot hand according to claim 1, wherein each of the plurality of blocks includes a through hole that leads to the passage.

3. The robot hand according to claim 2, wherein each of the plurality of blocks is disposed in the plurality of chambers in a non-rotatable manner.

4. The robot hand according to claim 1, wherein each of the plurality of blocks has an outer surface shape that is substantially the same as an inner surface shape of one of the plurality of chambers where each of the plurality of blocks is housed.

5. The robot hand according to claim 1, wherein the plurality of blocks has an outer surface on which a grain is formed.

6. The robot hand according to claim 1, wherein the sheath is formed of a material with a Shore A hardness of 10 to 90.

7. The robot hand according to claim 1, wherein each of the plurality of blocks includes a pair of flat surfaces orthogonal to an extending direction of the passage.

8. The robot hand according to claim 1, wherein the sheath includes:
the recess in a first surface, the first surface being a surface that does not make contact with an object grabbed by the robot hand in an outer surface of the sheath, and
a flat surface in a second surface, the second surface being a surface that is allowed to make contact with the object and is opposite to the first surface in the outer surface of the sheath.

9. The robot hand according to claim 1,
wherein a material of the sheath is urethane rubber, silicone rubber, or olefinic thermoplastic elastomer, and
wherein a material of the block is silicone resin.

10. A method for manufacturing a robot hand, comprising:
preparing a plurality of blocks through which a rod extends and a mold including a plurality of protrusions on an inner surface;
disposing the plurality of blocks in the mold in a state where the plurality of blocks and the plurality of protrusions are aligned in an alternate manner;
injecting liquid resin into the mold to surround the plurality of blocks with the resin;
curing the resin; and
pulling out the rod from the plurality of blocks with the plurality of blocks left in the resin cured.

11. The method for manufacturing the robot hand according to claim 10, further comprising disposing the mold in a posture in which the plurality of protrusions protrudes in a direction from a bottom toward a top.

12. The method for manufacturing the robot hand according to claim 10, wherein the plurality of blocks is disposed inside the mold in a state where the plurality of blocks is not in contact with the inner surface.

13. The method for manufacturing the robot hand according to claim 12, wherein the rod is disposed inside the mold in a non-rotatable manner with respect to the mold and the plurality of blocks.

14. The method for manufacturing the robot hand according to claim 10, further comprising:
supplying fluid into the resin cured and expanding the resin cured; and
peeling the plurality of blocks from an inner surface of the resin cured.
